Europäisches Patentamt

European Patent Office

Office européen des brevets

(11) Veröffentlichungsnummer: **0 241 976 B1**

## (12) EUROPÄISCHE PATENTSCHRIFT

(45) Veröffentlichungstag der Patentschrift: **29.07.92**

(21) Anmeldenummer: **87200604.4**

(22) Anmeldetag: **01.04.87**

(51) Int. Cl.⁵: **G05F 3/18**

(54) **Schaltungsanordnung zur Erzeugung einer Gleichspannung aus einer sinusförmigen Eingangsspannung.**

(30) Priorität: **10.04.86 DE 3612147**

(43) Veröffentlichungstag der Anmeldung:
**21.10.87 Patentblatt 87/43**

(45) Bekanntmachung des Hinweises auf die Patenterteilung:
**29.07.92 Patentblatt 92/31**

(84) Benannte Vertragsstaaten:
**BE DE FR GB NL**

(56) Entgegenhaltungen:
**EP-A- 0 147 922      DE-A- 2 451 053**
**DE-A- 2 646 621      FR-A- 2 330 243**
**US-A- 3 743 850      US-A- 4 320 325**

**Handbook of Semiconductor Electronics, L.P. Hunter; 3rd Edition 1970; McGraw-Hill, New York, USA**

**Electronic Circuits; E.C.Lowenberg, 1967; McGraw-Hill Book Company, New York, USA**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfa-brieken**
**Groenewoudseweg 1**
**NL-5621 BA Eindhoven(NL)**

(84) Benannte Vertragsstaaten:
**BE FR GB NL**

(72) Erfinder: **Wegener, Armin**
**Kleinmarschierstrasse 61**
**W-5100 Aachen(DE)**

(74) Vertreter: **Hartmann, Heinrich, Dipl.-Ing. et al**
**Philips Patentverwaltung GmbH Wenden-strasse 35 Postfach 10 51 49**
**W-2000 Hamburg 1(DE)**

## Beschreibung

Die Erfindung betrifft eine Schaltungsanordnung zur Erzeugung einer Gleichspannung aus einer sinusförmigen Eingangsspannung für wenigstens eine Last, mit einem Gleichrichter, dessen Ausgang mit einem der Last parallel geschalteten Glättungskondensator gekoppelt ist, mit einem von der Last gesteuerten Verbraucher, der zwischen den beiden Ausgangsanschlüssen des Gleichrichters angeordnet ist und der von der Last eingeschaltet wird, wenn die Spannung an der bzw. an den Lasten einen Schwellwert erreicht, mit einem Kondensator, der mit einem ersten Ausgangsanschluß des Gleichrichters gekoppelt ist und der über eine erste Diodenanordnung und den Verbraucher entladbar ist, und mit einer der ersten Diodenanordnung parallel geschalteten Reihenschaltung, die aus einer zweiten Diodenanordnung, über die nur der Ladestrom des Kondensators fließt, und aus der Last besteht.

Eine solche Schaltungsanordnung ist bekannt aus der DE-OS 28 36 325. Es wird hier ein Gleichrichter, dem ein Eingangskondensator parallel geschaltet ist, eine sinusförmige Eingangsspannung zugeführt wird. Die gleichgerichtete Spannung wird einem Frequenzsteller (Verbraucher) zur Steuerung eines elektrischen Motors zugeleitet. Der Frequenzsteller weist eine elektronische Steuervorrichtung auf, die von einer Versorgungsvorrichtung versorgt wird. Die Versorgungsvorrichtung, die dem Eingangskondensator parallel geschaltet ist, enthält eine Reihenschaltung aus einem weiteren Kondensator und einer ersten Diodenanordnung. Parallel zum weiteren Kondensator ist ein hochohmiger Widerstand geschaltet. An den Verbindungspunkt zwischen erster Diodenanordnung und dem weiteren Kondensator ist eine zweite Diodenanordnung gelegt, die noch an eine Parallelschaltung aus einer Zenerdiode und einem Glättungskondensator angeschlossen ist. Der Glättungskondensator liegt an dem Versorgungseingang der elektronischen Steuervorrichtung. Ist bei dieser Schaltungsanordnung der Verbraucher erst nach mehreren Schwingungszügen des sinusförmigen Eingangssignals betriebsbereit, kann sich der weitere Kondensator nicht über den Verbraucher während des Abfalles des sinusförmigen Eingangssignals entladen. Hierdurch kann die für die elektronische Steuervorrichtung erforderliche Spannung am Glättungskondensator nicht aufgebaut werden. Durch den zum weiteren Kondensator parallel geschalteten Widerstand findet zwar eine Entladung statt. Hierbei werden aber zusätzliche Verluste erzeugt.

Der Erfindung liegt die Aufgabe zugrunde, eine Schaltungsanordnung zu schaffen, die auch bei nicht betriebsbereitem Verbraucher eine Aufladung des Glättungskondensators auf den erforderlichen Wert für die Last ermöglicht.

Diese Aufgabe wird erfindungsgemäß dadurch gelöst, daß eine Starterschaltung vorgesehen ist, über die solange wenigstens der Entladestrom des Kondensators fließt, bis der Schwellwert im wesentlichen erreicht ist. Die Starterschaltung ist so ausgebildet, daß sie einen Transistor enthält, dessen Kollektor mit dem ersten Anschlußpunkt des Gleichrichters und dessen Emitter mit dem Verbindungspunkt zwischen der zweiten Diodenanordnung und der Parallelschaltung aus Last und Glättungskondensator gekoppelt ist. Über die Kollektor-Emitter-Strecke des Transistors fließt der Entladestrom des Kondensators, mit dem wenigstens ein Glättungskondensator aufgeladen wird. Der Transistor wird in dieser Schaltungsanordnung wirkungslos, wenn die Spannung am Glättungskondensator größer ist als die Spannung an der Basis des Transistors.

Bei der erfindungsgemäßen Schaltungsanordnung wird der Glättungskondensator während des Anstieges der gleichgerichteten Eingangsspannung mittels der Starterschaltung aufgeladen. Während des Abfalles der gleichgerichteten sinusförmigen Eingangsspannung fließt der Entladestrom des Kondensators über die Starterschaltung in den Glättungskondensator. Die Starterschaltung ist solange betriebsbereit, bis der Schwellwert erreicht ist. Es muß hierbei vorausgesetzt werden, daß der Verbraucher betriebsbereit ist. Anschließend entlädt sich der Kondensator über die erste Diodenanordnung und den Verbraucher.

Nachdem die Starterschaltung abgeschaltet ist, wird ebenfalls während der Anstiegszeit der gleichgerichteten Eingangsspannung der Kondensator aufgeladen. Der Ladestrom fließt während der Anstiegszeit über die zweite Diodenanordnung. Die erste und zweite Diodenanordnung kann z.B. aus wenigstens einer Diode, einem Transistor, einem Thyristor bestehen. Während der Abfallzeit der gleichgerichteten Eingangsspannung kann sich der Kondensator über den Verbraucher und die zweite Diodenanordnung entladen. Ein Glättungskondensator, dem eine Last parallel geschaltet ist, wird entweder während der Anstiegszeit oder während der Abfallzeit aufgeladen. Während der Zeit, in der die Parallelschaltung nicht vom Entlade- bzw. Ladestrom des Kondensators durchflossen wird, fließt in die Last der Strom aus dem Glättungskondensator. Die Kapazität des Kondensators und des Glättungskondensators bestimmen die Spannung, die an der Last anliegt.

In der erfindungsgemäßen Schaltungsanordnung kann eine Last entweder mit einer positiven oder negativen Spannung versorgt werden. Soll eine positive Spannung an der Last anliegen, ist vorgesehen, daß die erste Diodenanordnung, mit dem zweiten Anschlußpunkt des Gleichrichters gekoppelt ist. Soll die Last mit einer negativen Spannung versorgt werden, ist vorgesehen, daß der Verbindungspunkt zwischen der zweiten Diodenanordnung und der Parallelschaltung aus Last und Glättungskondensator mit dem zweiten Anschlußpunkt des Gleichrichters gekoppelt ist.

Die oben genannten Weiterbildungen können miteinander kombiniert werden, d.h. eine Last ist vorgesehen, die eine positive Spannung benötigt, und eine Last, die mit einer negativen Spannung versorgt wird. Bei dieser Weiterbildung ist vorgesehen, daß die der ersten Diodenanordnung parallel geschaltete Reihenschaltung eine erste Parallelschaltung aus einer ersten Last und einem ersten Glättungskondensator und eine zweite Parallelschaltung aus einer zweiten Last und einem zweiten Glättungskondensator enthält und daß der gemeinsame Verbindungspunkt der beiden Parallelschaltungen mit dem zweiten Anschlußpunkt des Gleichrichters gekoppelt ist.

Verwendet werden kann die erfindungsgemäße Schaltungsanordnung zum Betreiben eines Schaltnetzteiles (z.B. eine Schaltungsanordnung zum Betrieb einer Entladungslampe).

Der Verbraucher ist hierbei als Schaltnetzteil und wenigstens eine Last als eine zur Steuerung des Schaltnetzteiles erforderliche Steuerschaltung ausgebildet.

Zur Spannungsbegrenzung an der Last kann eine Zenerdiode vorgesehen werden, die der Last parallel geschaltet ist.

Anhand der Zeichnungen wird im folgenden die Erfindung näher erläutert. Es zeigen:

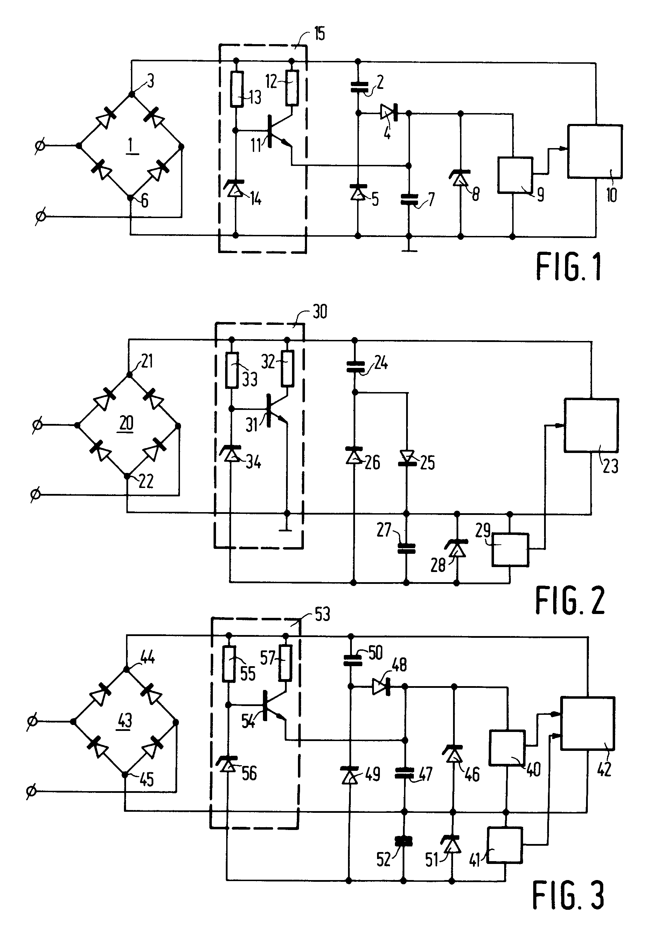

Fig. 1 bis 3 Ausführungsbeispiele der Erfindung.

In Fig. 1 wird einem Gleichrichter 1 eine sinusförmige Eingangsspannung mit einem Effektivwert von z.B. 220 V und einer Frequenz von 50 Hz zugeführt. Ein Kondensator 2 ist einerseits mit einem positiven Ausgangsanschluß 3 des Gleichrichters 1 und andererseits mit der Anode einer Diode 4 und der Kathode einer Diode 5 verbunden. Die Anode der Diode 5 ist an einen Masseanschluß 6 des Gleichrichters 1 angeschlossen. Eine Parallelschaltung aus einem Glättungskondensator 7, einer Zenerdiode 8 und einer Last 9 ist zwischen die Kathode der Diode 4 und dem Masseanschluß 6 des Gleichrichters 1 geschaltet. Die Last 9 kann eine Steuerschaltung sein, die einen Verbraucher 10 (z.B. eine Hochfrequenzschaltungsanordnung zum Betrieb einer Entladungslampe) steuert, der mit dem positiven Anschluß 3 und dem Masseanschluß 6 des Gleichrichters 1 verbunden ist und der z.B. ein Schaltnetzteil sein kann. Die Kathode der Zenerdiode 8, die zur Spannungsbegrenzung dient, ist mit der Kathode der Diode 4 verbunden.

Nach dem Einschalten, d.h. wenn der Schaltungsanordnung nach Fig. 1 eine sinusförmige Eingangsspannung zugeführt wird, ist der Verbraucher 10, der ein Schaltnetzteil darstellt, nicht in Funktion. Es muß, bevor dieser betriebsbereit wird, die erforderliche weitgehend konstante Gleichspannung an der Last 9, der Steuerschaltung, aufgebaut werden, damit die Steuerschaltung mit einem Steuersignal das Schaltnetzteil in Funktion setzen kann.

Am Kondensator 7 muß folglich eine für die Last notwendige Spannung aufgebaut werden. Die Kapazität des Kondensators 7 muß so gewählt werden, daß die Spannung am Kondensator 7 während der Entladung über die Steuerschaltung nicht unter einen bestimmten für die Funktion der Steuerschaltung notwendigen Wert sinkt.

Nach dem Einschalten während des ersten Anstieges der gleichgerichteten sinusförmigen Eingangsspannung ist die Diode 4 leitend und die Diode 5 gesperrt und die beiden einen kapazitiven Spannungsteiler bildenden Kondensatoren 2 und 7 werden aufgeladen. Die Kapazität der Kondensatoren 2 und 7 bestimmt die Spannung an ihnen. Unter der Voraussetzung, daß die Kapazität des Kondensators 2 so gewählt wird, daß die für die Last benötigte Spannung am Kondensator 7 aufgebaut wird und die Steuerschaltung und das Schaltnetzteil ohne Verzögerung betriebsbereit werden, kann sich der Kondensator 2 während des Abfalles der gleichgerichteten sinusförmigen Eingangsspannung über den Verbraucher 10 und die Diode 5, die leitend ist, während die Diode 4 gesperrt ist, entladen. Der Kondensator 7 liefert während des Abfalles der gleichgerichteten sinusförmigen Eingangsspannung der Last 9 den benötigten Strom. Während des nächsten Anstieges wird der Kondensator 2 aufgeladen und der Kondensator 7 nachgeladen.

In der Regel ist jedoch ein Schaltnetzteil nach dem Einschalten erst nach mehreren Schwingungszügen des sinusförmigen Eingangssignals betriebsbereit. Aus diesem Grunde ist eine Starterschaltung 15 vorgesehen worden, die den Kondensator 7 solange auflädt, bis das Schaltnetzteil aktiviert ist und über die sich der Kondensator 2 entladen kann. Die Starterschaltung 15 enthält einen NPN-Transistor 11, dessen Kollektor über einen Widerstand 12 mit dem positiven Anschluß 3 des Gleichrichters 1 und dessen Emitter mit der Kathode der Diode 4 verbunden ist. Die Basis des Transistors 11 ist mit einem an dem positiven Anschluß des Gleichrichters 1 angeschlossenen Widerstand 13 verbunden und mit der Kathode einer Zenerdiode 14. Die Anode der Zenerdiode 14 ist an den Masseanschluß 6 angeschlossen.

Nach dem Einschalten wird der Kondensator 7 während des Anstieges der gleichgerichteten sinusförmigen Eingangsspannung über den Transistor 11 aufgeladen. Der Kondensator 2 wird ebenfalls aufgeladen. Während des Abfalles der gleichgerichteten sinusförmigen Eingangsspannung fließt der Entladestrom des Kondensators 2 über den Transistor 11 und die Diode 5 in den Kondensator 7. Die Starterschaltung 15 ist solange betriebsbereit, bis die Summenspannung der Basis-Emitter-Spannung des Transistors 11 und die Zenerspannung der Zenerdiode 14 kleiner ist als die Spannung am Kondensator 7. Nachdem die Starterschaltung 15 abgeschaltet ist, wird während des darauffolgenden Anstieges der gleichgerichteten sinusförmigen Eingangsspannung der Kondensator 7 über den Kondensator 2 und die Diode 4 nachgeladen. Während des Abfalles entlädt sich der Kondensator 2 über den Verbraucher und die Diode 5.

Da der Kondensator 7 nach dem Einschalten über die Starterschaltung 15 aufgeladen wird, kann dieser so ausgelegt werden, daß er den erforderlichen Strom für die Last 9 liefert. Die Kapazität C des Kondensators 2 kann nach folgender Formel berechnet werden:

$$C = 2I/(Un - Ua) \, 2 \, f,$$

wobei I der Laststrom, Un der Effektivwert der sinusförmigen Eingangsspannung, Ua die Betriebsspannung an der Steuerschaltung und f die Frequenz der sinusförmigen Eingangsspannung ist.

In einem praktischen Schaltungsaufbau wurde eine Steuerschaltung verwendet, an der eine Spannung von ungefähr 12 V anliegt und der ein Laststrom von ungefähr 3 mA zufließt. Die Kapazität des Kondensators 7 betrug 220 μF und die Berechnung der Kapazität des Kondensators 2 ergab 0,1 μF.

Da die Last 9 und der Verbraucher 10 denselben Masseanschluß haben, hat sich gezeigt, daß die Eingangsstromverzerrungen vernachlässigbar sind. Außerdem weist die erfindungsgemäße Schaltungsanordnung einen hohen Wirkungsgrad auf, da praktisch nur geringe Verluste im Widerstand 13, der sehr hochohmig gewählt werden kann, und der Zenerdiode 14 auftreten.

In Fig. 2 ist ein zweites Ausführungsbeispiel der erfindungsgemäßen Schaltungsanordnung dargestellt. Einem Gleichrichter 20 wird eine sinusförmige Eingangsspannung zugeführt. Zwischen einem positiven Ausgangsanschluß 21 und einem Masseanschluß 22 des Gleichrichters 20 ist ein Verbraucher 23 geschaltet. Ein Kondensator 24 ist einerseits an den positiven Anschluß 21 und andererseits an die Anode einer Diode 25 und die Kathode einer Diode 26 angeschlossen. Die Kathode der Diode 25 ist mit dem Masseanschluß 22 verbunden. Eine Parallelschaltung aus einem Kondensator 27, einer zur Spannungsbegrenzung dienenden Zenerdiode 28 und einer Last 29, die den Verbraucher 23 steuert, ist zwischen die Anode der Diode 26 und dem Masseanschluß 22 gelegt. Die Kathode der Zenerdiode 28 ist an den Masseanschluß 22 angeschlossen. Im Gegensatz zum Ausführungsbeispiel der Fig. 1 wird die Last 29 im Ausführungsbeispiel nach Fig. 2 mit einer negativen Versorgungsspannung betrieben. Des weiteren ist noch eine Starterschaltung 30 vorgesehen, die einen NPN-Transistor 31 enthält, dessen Kollektor über einen Widerstand 32 mit dem positiven Anschluß 21 und dessen Emitter mit dem Masseanschluß 22 des Gleichrichters 20 verbunden ist. Zwischen der Basis des Transistors 31 und dem positiven Anschluß 21 ist ein hochohmiger Widerstand 33 geschaltet. An die Basis des Transistors 31 ist noch die Kathode einer Zenerdiode 34 gelegt, deren Anode mit der Anode der Diode 26 verbunden ist.

Nach dem Einschalten wird während des Anstieges der gleichgerichteten sinusförmigen Eingangsspannung der Kondensator 24 aufgeladen, indem der Ladestrom über die leitende Diode 25 fließt. Während des Abfalles der gleichgerichteten sinusförmigen Eingangsspannung fließt der Entladestrom des Kondensators 24 über den Transistor 31 und die leitende Diode 26 in den Kondensator 27. Die Starterschaltung 30 ist solange in Funktion, bis die Spannung am Kondensator 27 größer ist als die Summenspannung der Zenerspannung der Zenerdiode 34 und der Basis-Emitter-Spannung des Transistors 31. Nach dem Abschalten der Starterschaltung wird der Kondensator 27 nur noch mit dem Entladestrom des Kondensators 24 nachgeladen.

Eine Kombination der Ausführungsbeispiele nach Fig. 1 und Fig. 2 ist in Fig. 3 dargestellt. In diesem Ausführungsbeispiel wird eine Last 40 mit einer positiven Versorgungsspannung betrieben und eine Last 41 mit einer negativen Versorgungsspannung. Die beiden Lasten 40 und 41 steuern jeweils einen Verbraucher 42. In der erfindungsgemäßen Schaltungsanordnung nach Fig. 3 wird einem Gleichrichter 43 eine sinusförmige Eingangsspannung zugeführt. Zwischen einem positiven Anschluß 44 und einem Masseanschluß 45 des Gleichrichters 43 ist der Verbraucher 42 geschaltet. Der Last 40 ist eine zur Spannungsbegrenzung dienende Zenerdiode 46 und ein Kondensator 47 parallel geschaltet. Die Anode der Zenerdiode 46 ist an den Masseanschluß 45 gelegt. Die Parallelschaltung ist zwischen dem Masseanschluß 45 und der Kathode einer Diode 48 geschaltet. Die Anode der Diode 48 ist einerseits mit der Kathode einer Diode 49 und andererseits mit einem an den positiven Anschluß 44 angeschlossenen Kondensator 50 verbunden. Der Last 41 ist ebenfalls eine zur Spannungsbegrenzung dienende Zenerdiode 51 und ein Kondensator 52 parallel geschaltet. Die Kathode der Zenerdiode 51 ist an den Masseanschluß 45 gelegt. Die Parallelschaltung ist zwischen den Masseanschluß 45 und die Anode der Diode 49 geschaltet. Eine Starterschaltung 53 enthält einen NPN-Transistor 54, an dessen Basis ein mit dem positiven Anschluß 44 verbundener Widerstand 55 und die Kathode einer Zenerdiode 56 angeschlossen ist. Die Anode der Zenerdiode 56 ist an die Anode der Diode 49 gesetzt. Der Emitter des Transistors 54 ist mit der Kathode der Diode 48 verbunden und der Kollektor über einen Widerstand 57 mit dem positiven Anschluß 44.

Nach dem Einschalten wird während des Anstieges der gleichgerichteten sinusförmigen Eingangsspannung der Kondensator 50 und der Kondensator 47 aufgeladen. Während des Abfalles der gleichgerichteten sinusförmigen Eingangsspannung fließt der Entladestrom des Kondensators 50 über den Transistor 54 und die Diode 49 in die Kondensatoren 47 und 52. Die Starterschaltung 53 ist solange betriebsbereit bis die Summenspannung der Basis-Emitter-Spannung des Transistors 54 und die Zenerspannung der Zenerdiode 56 kleiner ist als die Summenspannung der Kondensatoren 47 und 52. Nach dem Abschalten der Starterschaltung 53 wird der Kondensator 47 während des Anstieges der gleichgerichteten sinusförmigen Eingangsspannung über die leitende Diode 48 nachgeladen, und während des Abfalles der gleichgerichteten sinusförmigen Eingangsspannung wird der Kondensator 52 über die leitende Diode 49 nachgeladen.

**Patentansprüche**

1. Schaltungsanordnung zur Erzeugung einer Gleichspannung aus einer sinusförmigen Eingangsspannung für wenigstens eine Last (9; 29; 40, 41), mit einem Gleichrichter (1, 20, 43), dessen Ausgang mit einer der Last parallel geschalteten Glättungskondensator (7; 27; 47, 51) gekoppelt ist, mit einem von der Last gesteuerten Verbraucher (10, 23, 42), der zwischen den beiden Ausgangsanschlüssen (3, 6; 21, 22; 44, 45) des Gleichrichters angeordnet ist und der von der Last eingeschaltet wird, wenn die Spannung an der bzw. an den Lasten einen Schwellwert erreicht, mit einem Kondensator (2, 24, 50), der mit einem ersten Ausgangsanschluß (3, 21, 44) des Gleichrichters gekoppelt ist und der über eine erste Diodenanordnung (5, 26, 49) und den Verbraucher entladbar ist, und mit einer der ersten Diodenanordnung parallel geschalteten Reihenschaltung, die aus einer zweiten Diodenanordnung (4, 25, 48), über die nur der Ladestrom des Kondensators fließt, und aus der Last besteht, dadurch gekennzeichnet, daß eine Starterschaltung (15, 30, 53) vorgesehen ist, die einen Transistor (11, 31, 54) enthält, dessen Kollektor mit dem ersten Anschlußpunkt (3, 21, 44) des Gleichrichters (1, 20, 43) und dessen Emitter mit dem Verbindungspunkt zwischen der zweiten Diodenanordnung (4, 25, 48) und der Parallelschaltung aus Last (9; 29; 40, 41) und Glättungskondensator (7; 27; 47, 52) gekoppelt ist, wobei über die Starterschaltung solange wenigstens der Entladestrom des Kondensators (2, 24, 50) fließt, bis der Schwellwert erreicht ist.

2. Schaltungsanordnung nach Anspruch 1, dadurch gekennzeichnet, daß die erste Diodenanordnung (5), mit dem zweiten Anschlußpunkt (6) des Gleichrichters (1) gekoppelt ist.

3. Schaltungsanordnung nach Anspruch 1, dadurch gekennzeichnet, daß der Verbindungspunkt zwischen der zweiten Diodenanordnung (25) und der Parallelschaltung aus Last (29) und Glättungskondensator (27) mit dem zweiten Anschlußpunkt (22) des Gleichrichters (20) gekoppelt ist.

4. Schaltungsanordnung nach Anspruch 1, dadurch gekennzeichnet, daß die der ersten Diodenanordnung (49) parallel geschaltete Reihenschaltung eine erste Parallelschaltung aus einer ersten Last (40) und einen ersten Glättungskondensator (47) und eine zweite Parallelschaltung aus einer zweiten Last (41) und einem zweiten Glättungskondensator (52) enthält und daß der gemeinsame Verbindungspunkt der beiden Parallelschaltungen mit dem zweiten Anschußpunkt (45) des Gleichrichters (43) gekoppelt ist.

5. Schaltungsanordnung nach einem der vorhergehenden Ansprüche, dadurch gekennzeichnet, daß der Verbraucher (10, 23, 42) als Schaltnetzteil und wenigstens eine Last (9; 29; 40, 41) als eine zur Steuerung des Schaltnetzteiles erforderliche Steuerschaltung ausgebildet ist.

6. Schaltungsanordnung nach einem der vorhergehenden Ansprüche, dadurch gekennzeichnet, daß jeder Last (9; 29; 40, 41) eine zur Spannungsbegrenzung dienende Zenerdiode (8; 28; 46, 51) parallel geschaltet ist.

**Claims**

1. A circuit arrangement for generating a DC voltage from a sinusoidal input voltage for at least one control load (9; 29; 40, 41), comprising a rectifier (1, 20, 43) whose output is coupled to a smoothing capacitor (7; 27; 47, 51) arranged in parallel to the control load, and comprising a power load (10, 23, 42) which is controlled by the control load, is arranged between the two output terminals (3, 6; 21, 22; 44, 45) of the rectifier and is switched on by the control load when the voltage at the control load(s) reaches a threshold value, and comprising a capacitor (2, 24, 50) which is coupled to a first output terminal (3, 21, 44) of the rectifier and can be discharged through a first diode arrangement (5, 26, 49) and the power load, and comprising a series circuit connected in parallel to the first diode arrangement and consisting of a second diode arrangement (4, 25, 48), through which only the charging current of the capacitor flows, and of the control load, characterized in that a starter circuit (15, 30, 53) is provided which comprises a transistor (11, 31, 54) whose collector is connected to the first terminal (3, 21, 44) of the rectifier (1, 20, 43) and whose emitter is connected to the junction point between the second diode arrangement (4, 25, 48) and the parallel circuit of control load (9; 29; 40 ,41) and smoothing capacitor (7; 27; 47, 52), through which starter circuit the discharging current of the capacitor (2, 24, 50) flows at least until the threshold value has been reached.

2.  A circuit arrangement as claimed in Claim 1, characterized in that the first diode arrangement (5) is coupled to the second connection terminal (6) of the rectifier (1).

3.  A circuit arrangement as claimed in Claim 1, characterized in that the junction point between the second diode arrangement (25) and the parallel circuit of control load (29) and smoothing capacitor (27) is coupled to the second connection terminal (22) of the rectifier (20).

4.  A circuit arrangement as claimed in Claim 1, characterized in that the series circuit connected in parallel to the first diode arrangement (49) comprises a first parallel circuit of a first control load (40) and a first smoothing capacitor (47) and a second parallel circuit of a second control load (41) and a second smoothing capacitor (52), and in that the common junction point of the two parallel circuits is coupled to the second connection terminal (45) of the rectifier (43).

5.  A circuit arrangement as claimed in any one of the preceding Claims, characterized in that the power load (10, 23, 42) is constructed so as to comprise a switch mode power supply and at least one control load (9; 29; 40, 41) serving as a control circuit necessary for controlling the switch mode power supply.

6.  A circuit arrangement as claimed in any one of the preceding Claims, characterized in that a voltage-limiting zener diode (8; 28; 46, 51) is connected in parallel to each control load (9; 29; 40, 41).

**Revendications**

1.  Montage de circuit pour générer une tension continue à partir d'une tension d'entrée sinusoïdale pour au moins une charge (9; 29; 40, 41), comportant un redresseur (1, 20, 43) dont la sortie est couplée à un condensateur de lissage (7; 27; 47, 51) connecté en parallèle à la charge, un consommateur (10, 23, 42) commandé par la charge, qui est monté entre les deux bornes de sortie (3, 6; 21, 22; 44, 45) du redresseur et qui est enclenché par la charge lorsque la tension sur la ou les charges atteint une valeur de seuil, un condensateur (2, 24, 50), qui est couplé à une première borne de sortie (3, 21, 44) du redresseur et qui peut être déchargé par l'intermédiaire d'un premier montage de diodes (5, 26, 49) et du consommateur, et un montage en série connecté en parallèle au premier montage de diodes et formé d'un second montage de diodes (4, 25, 48), par lequel ne passe que le courant de charge du condensateur, et de la charge, caractérisé en ce qu'est prévu un circuit de starter (15, 30, 53), qui comprend un transistor (11, 31, 54), dont le collecteur est connecté au premier point de connexion (3, 21, 44) du redresseur (1, 20, 43) et dont l'émetteur est connecté au point de jonction entre le second montage de diodes (4, 25, 48) et le montage en parallèle formé de la charge (9; 29; 40, 41) et du condensateur de lissage (7; 27; 47, 52), de sorte qu'au moins le courant de décharge du condensateur (2, 24, 50) passe par le circuit de starter jusqu'à ce que la valeur de seuil soit atteinte.

2.  Montage de circuit suivant la revendication 1, caractérisé en ce que le premier montage de diodes (5) est connecté au deuxième point de connexion (6) du redresseur (1).

3.  Montage de circuit suivant la revendication 1, caractérisé en ce que le point de jonction entre le second montage de diodes (25) et le montage en parallèle formé de la charge (29) et du condensateur de lissage (27) est connecté au deuxième point de connexion (22) du redresseur (20).

4. Montage de circuit suivant la revendication 1, caractérisé en ce que le montage en série connecté en parallèle au premier montage de diodes (49) comprend un premier montage en parallèle d'une première charge (40) et d'un premier condensateur de lissage (47) et un second montage en parallèle d'une seconde charge (41) et d'un second condensateur de lissage (52) et que le point de jonction commun des deux montages en parallèle est connecté au deuxième point de connexion (45) du redresseur (43).

5. Montage de circuit suivant l'une quelconque des revendications précédentes, caractérisé en ce que le consommateur (10, 23, 42) a la forme d'un bloc d'alimentation commutée et au moins une charge (9; 29; 40, 41), celle d'un circuit de commande nécessaire pour la commande du bloc d'alimentation commutée.

6. Montage de circuit suivant l'une quelconque des revendications précédentes, caractérisé en ce qu'une diode Zener (8; 28; 46, 51) servant à limiter la tension est connectée en parallèle à chaque charge (9; 29; 40, 41).

FIG. 1

FIG. 2

FIG. 3